# NEW EUROPEAN PATENT SPECIFICATION

(11) **EP 0 240 051 B2**
(45) Date of publication and mention of the opposition decision: **24.11.1993**
(45) Mention of the grant of the patent: 11.07.1990
(21) Application number: 87200420.5
(22) Date of filing: 06.03.1987
(51) Int. Cl.: B61L 3/12, H04B 7/26, G08G 1/123

(54) **Radio communication system provided with beacon transmitters**
Mit Bakensendern versehenes Funkverbindungssystem
Système de communication radio pourvu de balises émettrices

(30) Priority: 07.03.1986 NL 8600598
(43) Date of publication of application: 07.10.1987
(73) Proprietor: Koninklijke PTT Nederland N.V., 2509 CH Den Haag (NL)
(72) Inventor: Elsendoorn, Johannes Victorius, NL-2317 MP Leiden (NL)

(56) References cited:
- DE-A- 2 143 474
- DE-A- 2 222 110
- DE-A- 2 644 206
- DE-A- 2 704 143
- DE-C- 2 701 925
- DE-C- 3 040 080
- FR-A- 2 207 279
- GB-A- 1 355 803
- NL-A- 8 005 861
- WO 84/02043

## Description

### A. Background of the invention

### 1. Field of the invention

The invention relates to a radio communication system for establishing and maintaining radio speech or data communication between on the one hand a mobile transceiver disposed in a means of transport which follows an, at least partly, predetermined road, and on the other hand fixed transceivers located along road sections forming the predetermined road, which fixed transceivers are in communication with a control centre belonging to a road section, which mobile transceiver comprises receiving means and processing means for receiving respective processing system signals, a fixed beacon transmitter being disposed near a point where a first road section ends and a next one begins, which beacon transmitter transmits a system control signal, and the processing means setting the mobile transceiver on reception of the system control signal received via the receiving means during the time when the beacon transmitter was being passed, moreover, the system control signal transmitted by the beacon transmitter comprising parameters in an encoded form for the sake of the establishment and maintenance of communication between the mobile transceiver and the fixed transceivers and their associated control centre within said next road section, and said processing means setting the mobile transceiver in conformity with the received parameters on reception of the system control signal.

### 2. State of the art

A system corresponding to the field of the invention is known from the German Offenlegungsschrift DE2704143 [STANDARD ELEKTRIK LORENZ], disclosing a system for communicating data between a transceiver (BS) on board of a vehicle (FZG), which moves along a track, and fixed transceivers placed along the track. The track is divided into sections (B, TB), each using different communication channels. A beacon transmitter (P) is placed wherever two track sections join.

The fixed transceivers are connected to a control centre (OFS). The vehicle includes a receiver (AP) for receiving the beacon signal, which signal comprises communication parameters. When the vehicle passes from a first to a second track section, a processing means (L) on the vehicle sets the parameters of its onboard transceiver according to the signal received from the beacon transmitter.

A disadvantage of the known system is that as such it is not suitable for two directions of traffic flow. Since, a vehicle, driving in a first direction will receive from the beacon transmitter the same code signal as it would receive in the opposite direction, although the relevant 'new' road sections are extending on the one or on the other side of the beacon transmitter. In DE2704143 the beacon transmitter transmits, besides the channel code, a traffic direction code. Also there is suggested to calculate the traffic direction, using a pair of beacon transmitters.

### B. Summary of the invention

The present invention provides a radio communication system of the sort defined under A1, in which the system control signal transmitted by the beacon transmitter moreover comprises parameters, in an encoded form, for the sake of the establishment and maintenance of communications between the mobile transceiver and the fixed transceivers and their associated control centre within said first road section, said processing means comparing the received parameters, on reception of the system control signal, with the parameters set at that moment in the mobile transceiver, and setting the mobile transceiver in conformity with the parameters deviating from the actually set parameters.

The advantage of the system according to the invention is that it is able to handle traffic in both flow directions. Shortly said, the beacon transmits not only the (parameter) code (or codes) belonging to the road section on one side, but the code of the 'old' road section as well as the code belonging to the 'new' road section. The effect is that, independent of the flow direction, the vehicle will always receive the code belonging to its 'new' section ('B') as well as the code belonging to its 'old' section ('A'). The mobile transceiver, receiving the code of section B (that code hereafter indicated as 'β') as well as the code of section A (hereafter indicated as 'α'), and having an 'old' parameter setting in conformity with α, compares the received codes (α;β) with its own setting (= α), and resets its parameters in conformity with the code (β) which deviates from the transceiver's actual setting (= α).

In a figure:

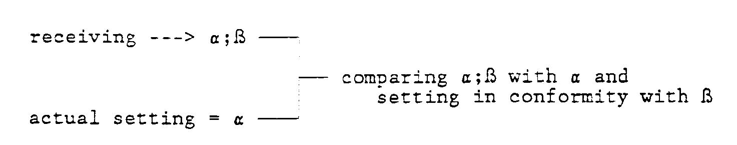

In this way the invention provides an extremely flexible system adaptable to the local circumstances of each road section, for example regarding the allotment of a frequency, and easy to change.

The system control signal transmitted by the beacon transmitter can form part of a system signal, which comprises not only the parameters for setting the mobile transceiver but also supplementary system data in an encoded form. For example the system signal can comprise an identification code of the relevant beacon transmitter. This identification code can then be transmitted, for example together with an identification code of the mobile transceiver, by the latter to the fixed transceivers, which transmit these codes to the control centre, where it is determined, by the reception of them, which means of transport has passed along which beacon transmitter. Thus in this way an automatic regular determination of the position of means of transport will be possible.

As complementary system data the system signal transmitted by the beacon transmitter can further comprise condition parameters of the beacon transmitter itself, id est parameters which give an indication concerning its functioning. These parameters too are received by the mobile transceiver and transmitted to the control centre by means of retransmission to the fixed transceivers. This can take place conditionally, notably only if the parameters give an indication that the beacon transmitter does not function sufficiently, or unconditionally. In this way it is achieved that the control centre (id est the control centre of the next road section) will be automatically alarmed, as soon as the beacon transmitter (which works "stand alone") insufficiently functions.

According to a further elaboration of the invention a beacon transmitter consists of two transmitters, which transmit at the same time, the one transmitter transmitting a signal comprising the condition parameters of the other one, and vice versa. It is also possible that the transmitters transmit by turns, in which case the signal strength itself functions as a condition parameter. As soon as the processing means of the mobile transceiver detect that one of the two beacon transmitter signals is too weak, this will be automatically passed on to the control centre (via the fixed transceivers). The fixed transceivers within a certain road section will generally make use of different transmission channels in order to avoid interference between them. When the beacon transmitter at the beginning of the road section is passed along, the channel frequencies will be derived from the system control signal transmitted by the beacon transmitter, as explained before, and the mobile transceiver will be set accordingly by the processing means. According to a technique which is known per se, the mobile transceiver can be provided with means for continuously scanning the relevant set channels and for selecting and switching through the channel with the greatest signal strength. After this channel has been selected and switched through the scanning process will be continued. If at a certain moment a greater signal strength is detected via another channel, the mobile transceiver (id est its receiving part) will be switched over to that channel. According to an embodiment of the invention said scanning and selecting means can scan not only the transmission channels of the fixed transceivers, but also the channel (respectively the channels) on which the beacon transmitters transmit and, switch over the receiving part of the mobile transceiver to this channel as soon as the greatest signal strength is detected on it. It will be under-standable that this will be the case when the beacon transmitter is passed along.

### C. Reference

DE 2704143 [standard Elektrik Lorenz]

### D. Short description of the figures

- Figure 1: shows the circuit diagram of a preferred embodiment of the present invention.
- Figures 2 and 3: show block diagrams of the mobile transceiver and the beacon transmitter.

### E. Description of the embodiment and figures

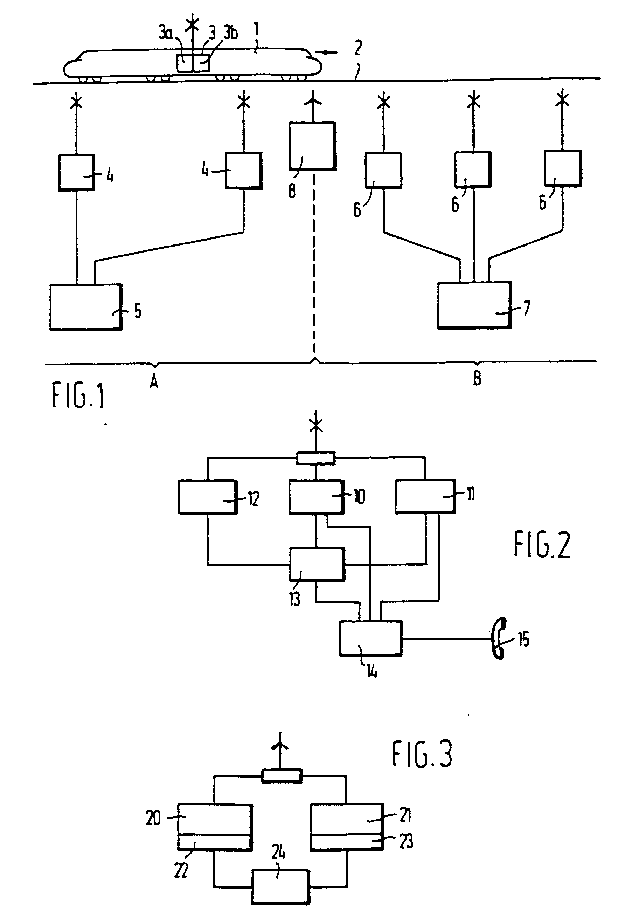

Figure 1 shows a diagrammatic representation of a train 1, running on a railway 2. The train is provided with a mobile transceiver 3, which comprises a communication transceiver 3a, via which a communication can be established with a number of fixed transceivers 4 located along the railway, and a beacon receiver 3b, capable of receiving signals transmitted by the beacon transmitters 8. The fixed transceivers 4 are connected via line communications to a control centre S of the train control area A. The beacon transmitters 8 work "stand alone" and transmit continuously. Adjacent to the control area A lies a train control area B, in which a control centre 7 is located, which is connected by line communications to a number of fixed transceivers 6. The channel frequencies of these transceivers 6 are different from those of the fixed transceivers 4. The addressing code for the control centre 5 differs from the addressing code for the control centre 7. When the train 1 crosses the line between the control area A and the control area B, it will pass along the beacon transmitter; 8, which constantly transmits a code signal which comprises the channel frequency (or frequencies) of the fixed transceivers 4, the addressing code of the control centre 5, the channel frequency (or frequencies) of the fixed transceivers 6 and the addressing code of the control centre 7. Moreover, the code signal comprises information concerning the condition of the beacon transmitter and also concerning its own identification code. When passing along the beacon transmitter 8 the mobile transceiver 3 switches over to the new values which apply to the train control area B, which occurs pursuant to the received code signal.

As already remarked in the preamble of the description the reason why the beacon transmitter 8 transmits not only the parameters (frequency or frequencies, and addressing code) of the control area B, but also those of the control area A is that trains running in the opposite direction also make use of the same beacon transmitter and the same code signal. Thus the mobile transceiver of such a train switches over to the parameters applicable to the control area A pursuant to the information in the same code signal.

When passing along the beacon transmitter 8 the mobile transceiver 3a will also detect the identification code of that beacon transmitter. This information is not only offered to the trainstaff, but also retransmitted by the transceiver 3, due to which this information is also pasaed on via the fixed transceiver 6 (respectively 4) to the control centre 7 and offered there. An identification code attributed to the mobile transceiver 3 itself and known in the control centre 7 (respectively 5) is sent along with said information by the mobile transceiver 3. From the combination of the identification code of the beacon transmitter 8 and the identification code of the mobile transceiver 3 it can be concluded in the control centre 7 (respectively 5) which train passed along which beacon transmitter. The identification code of the mobile transceiver 3 is moreover used by the control centre 7 (respectively 5) as an addressing code for messages from the control centre 7 (respectively 5) to the train 1. If the beacon transmitter signal moreover comprises information that there is a fault in the beacon transmitter, the mobile transceiver 3 will transmit this information, together with the identification code of the beacon transmitter 8 to the fixed transceivers 6 (respectively 4) which, in their turn, pass it on to the control centre 7 (respectively 5). Owing to said identification code it is known which beacon transmitter 8 is faulty.

Figure 2 shows a more detailed representation of the above-mentioned mobile transceiver 3, consisting of a communication receiver 10, a communication transmitter 11 and a beacon receiver 12; all three of them are connected to one common aerial. The frequencies of the receiver 10 and of the transmitter 11 are controlled from a control unit 13; also the addressing code, which has to be transmitted by the transmitter 11 to get access to the proper control centre 5 or 7 (in figure 1), is obtained from the control unit 13. when passing along a beacon transmitter 8 (in figure 1) the parameters stored in the control unit 13 will be exchanged for the parameters applicable to the train control area B (in figure 1). The transceiver 3 is further controlled via the control device 14, to which also a telemicrophone 15 is connected. It is remarked that if the frequency of the beacon transmitter is within the frequency range of the communication receiver 10, the latter can take over the task of the beacon receiver 12 by means of scanning the possible frequencies of the beacon transmitter 8 and of the fixed transceivers 4 respectively 6.

Figure 3 shows a diagram of a beacon transmitter 8 (in figure 1), consisting of two co-operating identical transmitters 20 and 21, each transmitting a signal via a common aerial, which signal is encoded with the parameters described above by the identical encoders 22 respectively 23. The two encoders 22 and 23 have been programmed by means of a control unit 24. Moreover, the control unit 24 monitors the functioning of the transmitters 20 and 21. In case one of the transmitters 20 or 21 does not function or insufficiently functions, the control unit 13 will program into the encoder 23 respectively 22 of the transmitter 21 respectively 20, which functions well at that moment, an alarm code, which is received, together with the identification code of the beacon transmitter, by the mobile transceiver 3 of a passing train 1, and then relayed to one of the control centres 5 or 7.

Finally it is remarked that the present invention applies not only to means of transport such as trains moving entirely over an accurately predetermined road, but also to other means of transport, such as for example motor-cars and buses. The only condition is that the means of transport have to pass along a beacon transmitter at a sufficiently short distance to be able to receive the necessary system signals, when going from one control area to another.

## Claims

1. Radio communication system for establishing and maintaining radio speech or data communication between on the one hand a mobile transceiver (3) disposed in a means of transport (1) which follows an, at least partly, predetermined road (2), and on the other hand fixed transceivers, located along road sections forming the predetermined road (2) which fixed transceivers are in communication with a control centre belonging to a road section, which mobile transceiver (3) comprises receiving means (10,12) and processing means (13) for receiving respective processing system signals, a fixed beacon transmitter (8) being disposed near a point where a first road section ends and a next one begins, which beacon transmitter (8) transmits a system control signal, and the processing means setting the mobile transceiver (3) on reception of the system control signal received via the receiving means (10,12) during the time when the beacon transmitter (8) was being passed, moreover, the system control signal transmitted by the beacon transmitter (8) comprising parameters in an encoded form for the sake of the establishment and maintenance of communication between the mobile transceiver (3) and the fixed transceivers (6) and their associated control centre (7) within the next road section (B), and in said processing means (13) setting the mobile transceiver (3) in conformity with the received parameters on reception of the system control signal, characterized in that the system control signal transmitted by the beacon transmitter (8) moreover comprises parameters, in an encoded form, for the sake of the establishment and maintenance of communications between the mobile transceiver (3) and the fixed transceivers (4) and their associated control centre(5) within said first road section (A), said processing means (13) comparing the received parameters, on reception of the system control signal, with the parameter set at that moment in the mobile transceiver (3), and setting the mobile transceiver (3) in conformity with the parameters deviating from the actually set parameters.

2. Radio communication system in accordance with claim 1 characterized in that at least part of the parameters relates to the channel frequencies of the fixed transceivers (4 respectively 6) and of the mobile transceiver (3).

3. Radio communication system in accordance with claim 1 characterized in that at least part of the parameters relates to addressing and/or identification codes to be transmitted along with message signals between the mobile transceiver (3) and the fixed transceivers (4 respectively 6).

4. Radio communication system in accordance with claim 1, characterized in that the system control signal transmitted by the beacon transmitter (8) forms part of a system signal which further comprises complementary data in an encoded form.

5. Radio communication system in accordance with claim 4, characterized in that the complementary system data or at least part of them are conditionally or unconditionally transmitted, either in a modified or in an unmodified form, to the control centre (5 respectively 7) by the processing means (13) via the mobile transceiver (3) and the fixed transceivers (4 respectively 6).

6. Radio communication system in accordance with claim 5, characterized in that the complementary system data comprise an identification code of the beacon transmitter (8).

7. Radio communication system in accordance with claim 6, characterized in that the mobile transceiver (3) transmits the identification code of the beacon transmitter (8) with the addition of an identification code of the means of transport (1).

8. Radio communication system in accordance with claim 5 or 6, characterized in that the complementary system data comprise one or more condition parameters concerning the condition of the beacon transmitter (8) itself.

9. Radio communication system in accordance with claim 8, characterized in that the processing means (13) transmit the condition parameters to the control centre (5 respectively 7) dependent on their value.

10. Radio communication system in accordance with claim 8, characterized in that the beacon transmitter (8) comprises a first transmitter (20) and a second transmitter (21), the first transmitter transmitting a code signal comprising first condition parameters concerning the condition of the second transmitter, and the second transmitter transmitting a code signal comprising second condition parameters concerning the condition of the first transmitter.

11. Radio communication system it accordance with claim 9, characterized in that the beacon transmitter (8) comprises a first transmitter (20) and a second transmitter (21), which transmit by turns, the mobile transceiver (3) transmitting an alarm signal in the case of an insufficient signal strength of one of the two transmitters, which alarm signal is transmitted to the associated control centre (5, 7) by means of reception by the relevant fixed transceivers (4, 6).

12. Radio communication system in accordance with claim 1, the fixed transceivers and the beacon transmitter transmitting at different channel frequencies, and the mobile transceiver comprising scanning and selecting means for scanning receive channels and selecting and switching through the channel with the greatest signal strength, characterized in that said scanning and selecting means scan the channels used by the transmitters of the fixed transceivers (4 respectively 6) within the relevant road section (A respectively B) as well as the channels to be used by the beacon transmitter (8), said scanning and selecting means transmitting the beacon transmitter signal to the processing means (13) of the mobile transceiver (3) after selection of a beacon transmitter channel.

## Patentansprüche

1. Radiokommunikationssystem zum Herstellen und Aufrechterhalten einer Radiokommunikation für Sprache oder Daten zwischen einem mobilen Funkgerät (3) einerseits, das in einem einem mindestens teilweise vorbestimmten Weg (2) folgenden Transportmittel (1) angeordnet ist, und ortsfesten Funkgeräten andererseits, sie sich entlang den Wegstrecken befinden, die den vorbestimmten Weg (2) bilden, wobei diese ortsfesten Funkgeräte sich in Kommunikation mit einem einer Wegstrecke zugehörigen Steuerzentrum befinden, wobei ferner die mobilen Funkgeräte (3) Empfangsmittel (10,12) und Signalverarbeitungsmittel (13) zum Empfang bzw. zur Verarbeitung von Systemsignalen umfasst, indem ein ortsfester Leitsender (8) in der Nähe des Punktes vorhanden ist, bei dem eine erste Wegstrecke endet und eine nächste beginnt, und wobei dieser Leitsender (8) ein Systemsteuersignal sendet und die Signalverarbeitungsmittel das mobile Funkgerät (3) einschalten nach Empfang des systemsteuersignals, das während der Zeit, in der der Leitsender (8) passiert wird, über die Empfangsmittel (10,12) empfangen wird, und das durch den Leitsender (8) gesendete Systemsteuersignal zusätzlich Parameter umfasst, die in codierter Form zum Herstellen und Aufrechterhalten einer Kommunikation zwischen dem mobilen Funkgerät (3) und den ortsfesten Funkgeräten (6) und dem innerhalb der nächsten Wegstrecke (B) ihnen zugeordneten Steuerzentrum (7) dienen, und nach Empfang des Systemsteuersignals die Signalverarbeitungsmittel (13) das mobile Funkgerät (3) nach Massgabe der empfangenen Parameter einschalten dadurch gekennzeichnet, dass das durch den Leitsender (8) gesendete Systemsteuersignal zusätzlich Parameter umfasst, die in codierter Form zum Herstellen und Aufrechterhalten von Kommunikationen zwischen dem mobile.. Funkgerät (3) und den ortsfesten Funkgeräten (4) und dem innerhalb der ersten Wegstrecke (A) ihnen zugeordneten Steuerzentrum (5) dienen, indem diese Signalverarbeitungsmittel (13) , nach Empfang des Systemsteuersignals, die empfangenen Parameter mit den Parametern vergleichen, die in diesem Moment im mobilen Funkgerät (3) vorliegen, und das mobile Funkgerät (3) nach Massgabe der von den gegenwärtig vorliegenden Parametern abweichenden Parameter einschalten.

2. Radiokommunikationssystem nach Anspruch 1, dadurch gekennzeichnet, dass mindestens ein Teil der Parameter sich auf die Kanalfrequenzen der ortsfesten Funkgeräte (4 bzw. 6) und des mobilen Funkgerätes (3) bezieht.

3. Radiokommunikationssystem nach Anspruch 1, dadurch gekennzeichnet, dass mindestens ein Teil der Parameter sich auf Adress- und/oder Identifikationscodes bezieht, die zusammen mit Meldesignalen zwischen dem mobilen Funkgerät (3) und den ortsfesten Funkgeräten (4 bzw. 6) zu senden sind.

4. Radiokommunikationssystem nach Anspruch 1, dadurch gekennzeichnet, dass das durch den Leitsender (8) gesendete Systemsteuersignal Bestandteil eines Systemsignals ist, das zusätzlich komplementäre Daten in codierter Form umfasst.

5. Radiokommunikationssystem nach Anspruch 4, dadurch gekennzeichnet, dass die komplementären Systemdaten oder wenigstens ein Teil davon bedingt oder nichtbedingt, entweder in modifizierter oder nichtmodifizierter Form, von den Signalverarbeitungsmitteln (13) über das mobile Funkgerät (3) und die ortsfesten Funkgeräte (4 bzw. 6) an das Steuerzentrum (5 bzw. 7) gesendet werden.

6. Radiokommunikationssystem nach Anspruch 5, dadurch gekennzeichnet, dass die komplementären Systemdaten einen Identifikationscode des Leitsenders (8) umfassen.

7. Radiokommunikationssystem nach Anspruch 6, dadurch gekennzeichnet, dass das mobile Funkgerät (3) den Identifikationscode des Leitsenders (8) zusätzlich mit einem Identifikationscode des Transportmittels (1) sendet.

8. Radiokommunikationssystem nach Anspruch 5 oder 6, dadurch gekennzeichnet, dass die komplementären Systemdaten einen oder mehrere Bedingungsparameter über den Zustand des Leitsenders (8) selbst umfassen.

9. Radiokommunikationssystem nach Anspruch 8, dadurch gekennzeichnet, dass die Signalverarbeitungsmittel (13) die Bedingungsparameter an das Steuerzentrum (5 bzw. 7) in Abhängigkeit ihres Wertes senden.

10. Radiokommunikationssystem nach Anspruch 8, dadurch gekennzeichnet, dass der Leitsender (8) einen ersten Sender (20) und einen zweiten Sender (21) umfasst, wobei der erste Sender ein codesignal sendet, das erste Bedingungsparameter über den Zustand des zweiten Senders umfasst, und wobei der zweite Sender ein codesignal sendet, das zweite Bedingungsparameter über den Zustand des ersten Senders sendet.

11. Radiokommunikationssystem nach Anspruch 9, dadurch gekennzeichnet, dass der Leitsender (8) einen ersten Sender (20) und einen zweiten Sender (21) umfasst, die der Reihe nach senden, wobei das mobile Funkgerät (3) ein Alarmsignal sendet, falls die Signalleistung eines von beiden Sendern ungenügend ist, indem das Alarmsignal durch Empfang über die relevanten ortsfesten Funkgeräte (4,6) an das zugeordnete Steuerzentrum (5, 7) gesendet wird.

12. Radiokommunikationssystem nach Anspruch 1, bei dem die ortsfesten Funkgeräte und der Leitsender in unterschiedlichen Kanalfrequenzen senden und das mobile Funkgerät Abtast- und Auswahlmittel umfasst, um Empfangskanäle abzutasten, auszuwählen und auf den Kanal mit der grössten Leistung umzuschalten, dadurch gekennzeichnet, dass diese Abtast- und Auswahlmittel die von den Sendern der ortsfesten Funkgeräte (4 bzw. 6) verwendeten Kanäle innerhalb der relevanten Wegstrecke (A bzw. B) sowie die vom Leitsender (8) zu verwendenden Kanäle abtasten, wobei diese Abtast- und Auswahlmittel nach Auswahl eines Leitsenderkanals das Leitsendersignal an die Signalverarbeitungsmittel (13) des mobilen Funkgerätes (3) senden.

## Revendications

1. Système de communication radio pour établir et maintenir la conversation par radio ou la transmission de données entre, d'une part, un émetteur-récepteur mobile (3) implanté dans un véhicule (1) qui suit une route (2) prédéterminée, au moins partiellement, et, d'autre part des émetteurs-récepteurs fixes, disposés le long de sections de route formant la route (2) prédéterminées, les émetteurs-récepteurs sont en communication avec un centre de commande appartenant à une section de route, cet émetteur-récepteur (3) mobile comprend des dispositifs de réception (10, 12) et des dispositifs de traitement (13) pour recevoir les signaux du système de traitement respectifs, une balise fixe émettrice (8) étant placée près d'un point ou une première section de route se termine et où la suivante commence, cette balise-émettrice (8) transmet un signal de commande du système, et les dispositifs de traitement mettant l'émetteur-récepteur (3) en état de recevoir le signal de commande du système par l'intermédiaire de dispositifs de réception (10, 12) pendant le temps où ils passent devant la balise-émettrice (8), le signal de commande du système transmis par la balise-émettrice (8) comprend en outre des paramètres sous forme codée pour réaliser et maintenir la communication entre l'émetteur-récepteur mobile (3) et les émetteurs-récepteurs fixes (6) et leur centre de commande associé (7) dans la section de route suivante (B) et ces dispositifs de traitement précitées (13) placent l'émetteur-récepteur mobile (3) en conformité avec les paramètres reçus lors de la réception du signal de commande du système, caractérisé en ce que le signal de commande du système émis par la balise-émettrice (8) comprend en plus des paramètres, sous forme codée pour établir et maintenir les communications entre l'émetteur-récepteur mobile (3) et les émetteurs-récepteurs fixes (4) et leur centre de commande (5) associé, dans la première section de route, ces dispositifs de traitement (13) comparant les paramètres reçus, à la réception du signal de commande du système, avec les paramètres affichés à ce moment dans l'émetteur-récepteur mobile (3) et réglant l'émetteur-récepteur mobile (3) sur les paramètres qui sont différents de ceux affichés précédemment.

2. Système de communication radio selon la revendication 1 , caractérisé en ce qu'au moins une partie des paramètres correspond aux fréquences du canal des émetteurs-récepteurs fixes (4, respective- ment 6), et de l'émetteur récepteur mobile (3).

3. Système de communication radio selon la revendication 1 , caractérisé en ce qu'au moins une partie des paramètre concerne les code d'adresse et/ou d'identification à transmettre avec les signaux de massage entre l'émetteur-récepteur mobile (3) et les émetteurs-récepteurs fixes (4, respectivement 6).

4. Système de communication radio selon la revendication 1, caractérisé en ce que le signal de commande du système émis par la balise-émettrice (8) est partie intégrante d'un signal du système qui comprend en outre des données complémentaires sous forme codée.

5. Système de communication radio selon la revendication 4, caractérisé en ce que les données du système complémentaires, ou du moins une partie d'entre elles, sont transmises conditionnellement ou inconditionnellement, soit sous une forme modifiée, soit sous une forme non modifiée, vers le centre de commande (5, respectivement 7), par les dispositifs de traitement (13) par l'intermédiaire de l'émetteur-récepteur mobile (3) et des émetteurs-récepteurs fixes (4, respectivement 6).

6. Système de communication radio selon la revendication 5, caractérisé en ce que les données de système complémentaires comprennent un code d'identification de la balise-émettrice (8).

7. Système de communication radio selon la revendication 6 , caractérise en ce que l'émetteur-récepteur (3) émet le code d'identification de la balise-émettrice (8) en plus d'un code d'identification du véhicule (1).

8. Système de communication radio selon la revendication 5 ou 6 , caractérisé en ce que les données de système complémentaires comprennent un ou plusieurs paramètres conditionnels concernant la condition de la balise-émettrice (8) elle-même.

9. Système de communication radio selon la revendication 8, caractérisé en ce que les dispositifs de traitement (13) émettent les paramètres de condition vers le centre de commande (5, respectivement 7), suivant leur valeur.

10. Système de communication radio selon la revendication 8, caractérisé en ce que la balise-émettrice (8) comprend un premier émetteur (20) et un second émetteur (21), le premier émetteur émettant un signal codé comprenant les paramètres de première condition concernant la condition du second émetteur et le second émetteur émettant un signal codé comprenant les paramètres de seconde condition concernant la condition du premier émetteur.

11. Système de communication radio selon la revendication 9 , caractérisé en ce que la balise-émettrice (8) comprend un premier émetteur (20) et un second émetteur (21), qui émettent à tour de rôle, l'émetteur-récepteur (3) transmettant un signal d'alarme au cas où la puissance d'émission de signal de l'un des deux est insiffisante, ce signal d'alarme étant transmis au centre de commande associé (5, 7) grâce à la réception par les récepteurs fixes correspondants (4, 6).

12. Système de communication radio selon la revendication 1, dont les émetteurs-récepteurs fixes et l'émetteur de balise émettent à différentes fréquences de canal, et l'émetteur-récepteur mobile comprend des dispositifs de balayage et de sélection pour balayer les canaux reçus et sélectionne et commute pour le canal ayant la plus grande puissance de signal, caractérisé en ce que les dispositifs de balayage et de sélection balayent les canaux utilisés par les émetteurs des émetteurs-récepteurs fixes (4, respectivement 6), dans la section de route concernée (A, respectivement B) ainsi que les canaux à utiliser par la balise-émettrice (8), les dispositifs de balayage et de sélection transmettant le signal de la balise-émettrice aux dispositifs de traitement (13) de l'émetteur-récepteur mobile (3) après sélection d'un canal de balise-émettrice.
